**Europäisches Patentamt**

**European Patent Office**

**Office européen des brevets**

(19)

(11) Veröffentlichungsnummer: **0 021 243**
**B1**

(12) **EUROPÄISCHE PATENTSCHRIFT**

(45) Veröffentlichungstag der Patentschrift:
**27.10.82**

(51) Int. Cl.³: **F 16 J 15/40,** F 16 J 15/34,
B 63 H 23/36

(21) Anmeldenummer: **80103243.4**

(22) Anmeldetag: **11.06.80**

(54) **Abdichtungsanordnung für Stevenrohre von Schiffen.**

(30) Priorität: **22.06.79 DE 2925244**

(43) Veröffentlichungstag der Anmeldung:
**07.01.81 Patentblatt 81/1**

(45) Bekanntmachung des Hinweises auf die Patenterteilung:
**27.10.82 Patentblatt 82/43**

(84) Benannte Vertragsstaaten:
**FR GB IT NL SE**

(56) Entgegenhaltungen:
**CH-A-583 391**
**DD-A-101 476**
**DE-A-2 350 497**
**DE-A-2 626 048**
**DE-U-1 953 043**
**FR-A-1 561 443**
**GB-A-1 492 965**
**US-A-3 291 491**
**US-A-3 575 426**
**US-A-3 625 523**
**US-A-3 726 531**

(73) Patentinhaber: **Howaldtswerke-Deutsche Werft Aktiengesellschaft Hamburg und Kiel, Schwentinestrasse, D-2300 Kiel 14 (DE)**

(72) Erfinder: **Pietsch, Günter, Wrietkamp 16, D-2000 Hamburg 62 (DE)**

(74) Vertreter: **Hansmann, Dierk, Dipl.-Ing., Jessenstrasse 4, D-2000 Hamburg 50 (DE)**

## Abdichtungsanordnung für Stevenrohre von Schiffen

Abdichtungsanordnung für Stevenrohranlagen von Schiffen mit einer aus einem Gleitring und einem Gegenring bestehenden Gleitringdichtung und einem weiteren Dichtungselement, wobei zwischen der Gleitringdichtung und dem Dichtungselement eine Kammer gebildet ist, die über einen Zulaufkanal mit einem flüssigen Medium gefüllt ist.

Bei derartigen Dichtungen besteht das Problem, eine Leckage von Außenwasser in das Stevenrohr zu verhindern sowie zu unterbinden, daß Öl nach außen austritt und damit eine Umweltbelastung darstellt.

Nach der US-A-3 291 491 ist eine Abdichtung für U-Boot-Wellen bekannt, wobei eine Kammer an einer Seite der Gleitringdichtung mit Seewasser gefüllt und mit dem Außenwasser verbunden ist, während eine weitere Kammer an der anderen Seite der Gleitringdichtung mit der Luft im Bootsinnern verbunden ist. Hierbei besteht das Problem, daß die Gleitringdichtung unmittelbar dem Außenwasser ausgesetzt ist und der vorhandene Schmutz einen starken Verschleiß der Gleitringe verursacht.

Weiterhin ist nach der DE-A-2 626 048 bereits eine Anordnung bekannt, die bezogen auf die Wassereintrittsseite hinter der Gleitringdichtung eine Dichtmanschette und einen Leckraum aufweist. In der Praxis hat sich aber gezeigt, daß diese Anordnung relativ störanfällig ist, da die Gleitringdichtung ungeschützt unmittelbar dem Wasser ausgesetzt ist und damit der im Wasser befindliche Schmutz starken Verschleiß der Gleitringe verursacht.

Der Erfindung liegt die Aufgabe zugrunde, eine Abdichtung gemäß dem Oberbegriff des Anspruches 1 zu schaffen, bei der auf einfache Weise ein Verschleiß durch äußere Einflüsse unterbunden wird, um eine störungsunanfällige Abdichtung ohne auftretende Umweltbelastung zu gewährleisten und eine anpassungsfähige Abdichtung zu ermöglichen.

Die Lösung dieser Aufgabe erfolgt erfindungsgemäß dadurch, daß das flüssige Medium aus Wasser gegebenenfalls mit Zusätzen besteht und in der Kammer über einen angeschlossenen Druckerzeuger ein Druck höher als der Außenwasserdruck derart einstellbar ist, daß das weitere Dichtungselement durch Flüssigkeitsaustritt aus der Kammer am ganzen Umfang des Abdichtungselementes geschmiert und von Verschmutzungen freigehalten wird und daß hinter der Gleitringdichtung auf der der Kammer angewandten Seite ein druckloser Leckageraum mit einem Ablaufkanal angeordnet ist und ein Teil der Flüssigkeit zwischen der Kammer und dem Leckageraum durch die Gleitringdichtung zur Schmierung durchtritt.

Durch diese Ausbildung wird der Vorteil erzielt, daß geringe Mengen umweltfreundlicher Medien durch das Dichtungselement nach außen gedrückt werden und es erfolgt eine Entlastung gegenüber dem Außendruck. Weiterhin werden von der Gleitringdichtung entsprechende Schmutzteilchen ferngehalten, so daß der Verschleiß erheblich herabgesetzt wird. Selbstverständlich können dem flüssigen Medium dabei auch die Schmierfähigkeit erhöhende Mittel oder Additive zugesetzt werden.

Zur zweckmäßigen Ausgestaltung der Erfindung wird vorgeschlagen, daß einer der Ringe der Gleitringdichtung axial verschiebbar angeordnet ist und Steuerelemente zur Aufrechterhaltung eines Axialdrucks zwischen Gleitring und Gegenring unter Ausbildung eines Schmierspalts vorgesehen sind. Hierdurch ist es auch möglich, den Axialdruck unabhängig von Längenänderungen der Welle aufrechtzuerhalten.

Um eine erfindungsgemäße Anpassung der Gleitringdichtung günstig zu gestalten, wird vorgeschalgen, daß die Steuermittel zur Aufrechterhaltung des Axialdrucks aus einem als Ringkolben ausgebildeten Gegenring der Gleitringdichtung bestehen, wobei der Axialdruck über Zuleitung von außen steuerbar ist.

Alternativ ist vorgesehen, daß die Steuermittel zur Aufrechterhaltung des Axialdrucks durch Federn gebildet sind.

In der Zeichnung sind Ausführungsbeispiele der Erfindung schematisch dargestellt. Es zeigt

Fig. 1 einen Halblängsschnitt einer Stevenrohranlage mit einer über einen Ringkolben gesteuerten Gleitringdichtung,

Fig. 2 einen Halblängsschnitt einer Stevenrohranlage mit einer über Federn gesteuerten Gleitringdichtung.

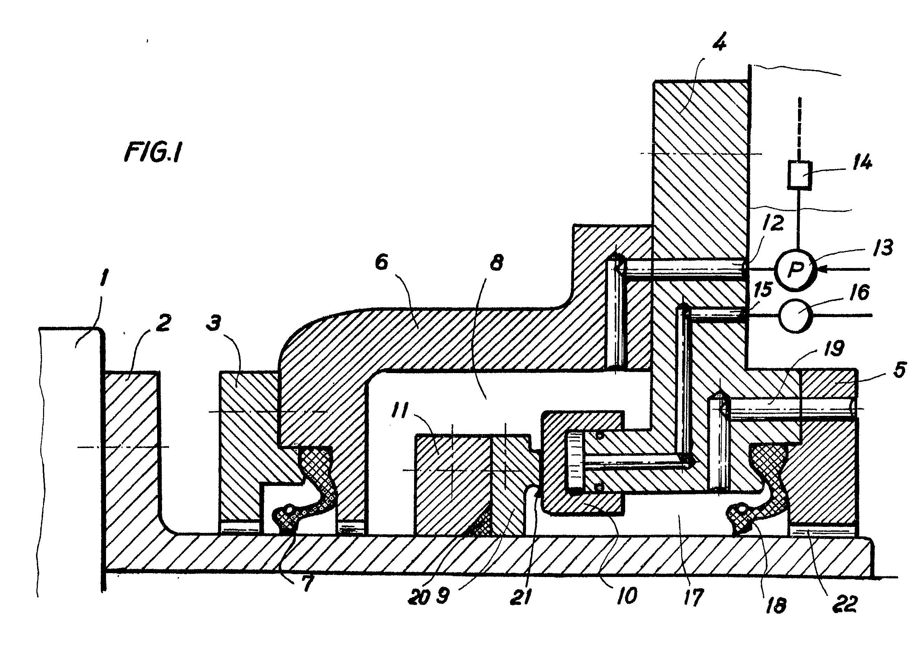

Die dargestellte Anordnung gemäß Fig. 1 zeigt eine mit einer Propellernabe 1 verbundene Laufbuchse 2 ohne die zugehörige Welle, der entsprechende Ringflanschteile 3, 4 und 5 zugeordnet sind, wobei zwischen den Ringflanschteilen 3 und 4 ein Dichtungsgehäuse 6 angeordnet ist. Dem Dichtungsgehäuse 6 ist eine Abdichtung 7 in Form einer Lippendichtung an der Wassereintrittsseite vorgeschaltet, die eine innerhalb des Gehäuses 6 gebildete Kammer 8 abdichtet. Die Kammer 8 wird darüber hinaus durch eine Gleitringdichtung aus einem Gleitring 9 und einem Gegenring 10 abgeschlossen. Hierbei ist der Gleitring 9 über einen Klemmring 11 mit der Laufbuchse 2 unter Zwischenschaltung einer statischen Dichtung 20 fest verbunden. Die Kammer 8 ist beispielsweise mit Wasser gefüllt und wird über einen Zulaufkanal 12 mit Druck beaufschlagt. Das Wasser ist gegebenenfalls mit Zusätzen zur Erhöhung der Schmierfähigkeit oder Additiven versehen. Es können selbstverständlich auch Mittel, die das Wachsen von Algen verringern, zugesetzt werden. Zum Druckaufbau in der Kammer 8 ist eine Pumpe 13 dem Zuluftkanal 12 zugeordnet, die gegebenenfalls durch einen Außenwasserdruckgeber 14 gesteuert wird, um einen Druck höher als den Außenwasserdruck in der Kammer 8 aufrechtzuerhalten.

Zur Erzeugung eines Axialdrucks der Gleitringdichtung 9, 10 ist der Gegenring 10 als Ringkolben ausgebildet und wird über einen Kanal 15 unter einem entsprechenden Druck gehalten. Hierzu ist ein Druckerzeuger 16 an den Kanal 15 angeschlossen. Mit diesem gesteuerten Anpreßdruck ist es auch möglich, Längenänderungen der Welle auszugleichen. Zwischen Gleitring 9 und Gegenring 10 bildet sich dabei ein natürlicher Schmierspalt 21 aus.

Der Kammer 8 ist ein weiterer Raum 17 als Leckageraum nachgeschaltet und mit einer Dichtung 18 gegenüber einem Durchtritt 22 zum eigentlichen Stevenrohr abgeschlossen. Dieser Raum 17 ist mit einem Ablaufkanal 19 verbunden. Die Gleitringdichtung 9, 10 bildet dabei die andere Abdichtung für die Kammer 8.

Die Funktion der Anordnung besteht darin, daß die Kammer 8 unter einem höheren Druck als dem vorhandenen Außenwasserdruck steht und damit ein Eindringen von Außenwasser verhindert sowie geringfügige Mengen des enthaltenen Mediums durch die Dichtung 7 nach außen abgegeben werden. Hierdurch wird einmal die Dichtung 7 entlastet und weiterhin die einstellbare Gleitringdichtung 9, 10 und die Dichtung 7 von Schmutzteilchen freigehalten. Gleichzeitig erfolgt eine Schmierung der Dichtungen 7 bzw. 9, 10. Die in den Raum 17 eindringende Leckage wird dabei über den Ablaufkanal 19 abgeführt.

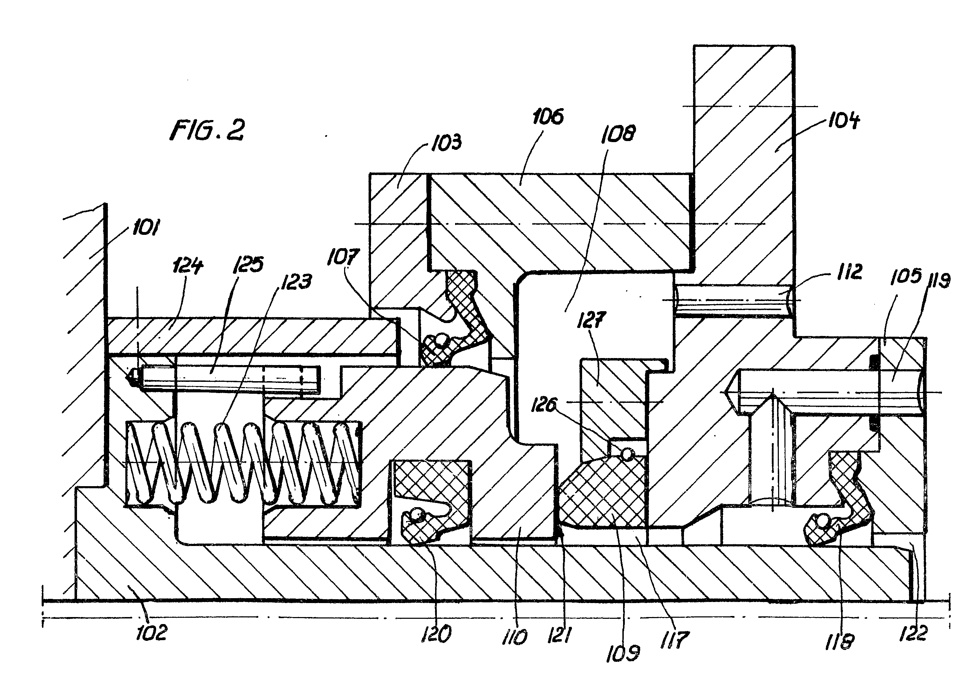

Im Ausführungsbeispiel gemäß Fig. 2 ist das Steuermittel für die Gleitringdichtung mit Gleitring 109 und Gegenring 110 zur Aufrechterhaltung eines Axialdrucks durch Federn 123 gebildet. Hierzu sind mehrere Federn 123 über den Umfang verteilt. Der Gegenring 110 ist aus mehreren Teilelementen gebildet und über eine Feder 126 zusammengehalten. Zusätzlich ist dem Umfang eine Halterung 127 zugeordnet. Ansonsten ist eine Ausbildung entsprechend Fig. 1 vorhanden.

Die Laufbuchse 102 ist ebenfalls mit der Propellernabe 101 verbunden. Hierbei ist mit der Laufbuchse 102 ein Hülsenkörper 124 verbunden und bildet den Aufnahmeraum für die Federn 123, die zwischen Gleitring 109 und dem Flansch der Laufbuchse 102 angeordnet sind. Der mitdrehende Gleitring 109 ist über eine statische Dichtung 120 angeordnet und über Mitnehmerbolzen 125 mit der Laufbuchse verschiebbar gekoppelt.

Zwischen ortsfesten Flanschteilen 103, 104 und 105 ist ein Gehäuseteil 106 zur Bildung einer Kammer 108 angeordnet. Die Kammer 108 ist über eine Zuleitung 112 in vorgenannter Weise mit einem nicht dargestellten Druckerzeuger verbunden. Die Abdichtung der Kammer 108 erfolgt einmal an der Wassereintrittsseite über eine Lippendichtung 107 und zum anderen durch die Gleitringdichtung 109, 110. Zur Erzeugung eines Axialdrucks dienen die Federn 123, die eine weiche Federkennlinie aufweisen, so daß die Andruckkraft auch bei Verschiebung des Gegenringes 110 infolge Längenänderung der Wellen konstant bleibt. Zwischen der Gleitringdichtung 109, 110 bildet sich ein natürlicher Schmierspalt aus.

Der Kammer 108 ist ein Leckageraum 117 nachgeschaltet, der mit einer Dichtung 118 gegenüber einem Durchtritt 122 zum eigentlichen Stevenrohr abgeschlossen ist. Der Leckageraum 117 ist mit einem Ablaufkanal 119 verbunden. Die Funktion dieser Anordnung ist entsprechend Fig. 1.

**Patentansprüche**

1. Abdichtungsanordnung für Stevenrohranlagen von Schiffen mit einer aus einem Gleitring (9) und einem Gegenring (10) bestehenden Gleitringdichtung und einem weiteren Dichtungselement (7), wobei zwischen der Gleitringdichtung (9, 10) und dem Dichtungselement eine Kammer (8) gebildet ist, die über einen Zulaufkanal (12) mit einem flüssigen Medium gefüllt ist, dadurch gekennzeichnet, daß das flüssige Medium aus Wasser gegebenenfalls mit Zusätzen besteht und in der Kammer (8, 108) über einen angeschlossenen Druckerzeuger (13) ein Druck höher als der Außenwasserdruck derart einstellbar ist, daß das weitere Dichtungselement (7, 107) durch Flüssigkeitsaustritt aus der Kammer (8, 108) am ganzen Umfang des Dichtungselementes (7, 107) geschmiert und von Verschmutzungen freigehalten wird und daß hinter der Gleitringdichtung (9, 10, 109, 110) auf der der Kammer (8, 108) abgewandten Seite ein druckloser Leckageraum (17, 117) mit einem Ablaufkanal (19, 119) angeordnet ist und ein Teil der Flüssigkeit zwischen der Kammer (8, 108) und dem Leckageraum (17, 117) durch die Gleitringdichtung (9, 10, 109, 110) zur Schmierung durchtritt.

2. Abdichtungsanordnung nach Anspruch 1, dadurch gekennzeichnet, daß einer der Ringe der Gleitringdichtung (9, 10, 109, 110) axial verschiebbar angeordnet ist und Steuerelemente zur Aufrechterhaltung eines Axialdrucks zwischen Gleitring (9, 109) und Gegenring (10, 110) unter Ausbildung eines Schmierspalts (21, 121) vorgesehen sind.

3. Abdichtungsanordnung nach Anspruch 1 und 2, dadurch gekennzeichnet, daß die Steuermittel zur Aufrechterhaltung des Axialdrucks aus einem als Ringkolben ausgebildeten Gegenring (10) der Gleitringdichtung bestehen, wobei der Axialdruck über Zuleitung (15) von außen steuerbar ist.

4. Abdichtungsanordnung nach Anspruch 1 und 2, dadurch gekennzeichnet, daß die Steuermittel zur Aufrechterhaltung des Axialdrucks durch Federn (123) gebildet sind.

## Claims

1. A sealing arrangement for stern Tubes of ships, comprising a slide ring sealing consisting of a slide ring (9) and a counter-ring (10), and an additional sealing element (7), a chamber (8) being formed between the slide ring sealing (9, 10) and the sealing element, which chamber is filled with a liquid medium via a feed channel (12), characterised in that the liquid medium consists of water possibly with additives and that a pressure higher than the external water pressure can be set up in the chamber (8, 108) via a pressure generator (13) connected thereto, in such a way that the additional sealing element (7, 107) is lubricated, and kept free from dirt, through exudation of liquid from the chamber (8, 108) over the entire periphery of the sealing element (7, 107), and that a zero-pressure leakage space (17, 117) having an exit channel (19, 119) is located behing the slide ring sealing (9, 10, 109, 110) on the side facing away from the chamber (8, 108), and a part of the liquid passes through the slide ring sealing (9, 10, 109, 110) between the chamber (8, 108) and the leakage space (17, 117) so as to effect lubrication.

2. A sealing arrangement as set forth in claim 1, characterised in that one of the rings of the slide ring sealing (9, 10, 109, 110) is arranged axially slidable and that control elements are provided for maintaining an axial pressure between the slide ring (9, 109) and the counter-ring (10, 110), so as to form a lubricating gap (21, 121).

3. A sealing arangement as set forth in claims 1 and 2, characterised in that the control means for maintaining the axial pressure consist of a counterring (10), constructed as a ring piston, of the slide ring sealing, the axial pressure being controllable from the exterior via a feed line (15).

4. A sealing arrangement as set forth in claims 1 and 2, characterised in that the control means for maintaining the axial pressure are defined by springs (123).

## Revendications

1. Dispositif d'étanchéité pour installations de tubes d'étambot de navires qui comporte un dispositif d'étanchéité à bagues coulissantes, se composant d'une bague coulissante (9) et d'une contre-bague (10), et un autre élément d'étanchéité (7), une chambre (8) qui, par un canal d'arrivée (12), est remplie d'un agent liquide étant formée entre le dispositif à bagues d'étanchéité coulissantes (9, 10) et l'élément d'étanchéité, le dispositif d'étanchéité étant caractérisé en ce que l'agent liquide est constitué par de l'eau, éventuellement avec agents d'addition, et en ce que dans la chambre (8, 108), il peut être réglé, par l'intermédiaire d'un générateur de pression (13) y raccordé, une pression qui est supérieure à la pression d'eau extérieure, en ce que le second élément d'étanchéité (7, 107) est lubrifié par la sortie de liquide de la chambre (8, 108) sur toute la périphérie de l'élément d'étanchéité (7, 107) et est préservé des encrassements, en ce qu'à l'arrière du dispositif d'étanchéité à bagues coulissantes (9, 10, 109, 110), un côté opposé à la chambre (8, 108), il est prévu une chambre de fuite qui n'est pas sous pression (17, 117), avec un canal de sortie (19, 119), et en ce qu'une partie du liquide passe, entre la chambre (8, 108) et la chambre de fuite (17, 117), par le dispositif d'étanchéité à bagues coulissantes (9, 10, 109, 110) en vue de la lubrification.

2. Dispositif d'étanchéité suivant la revendication 1, caractérisé en ce que l'une des bagues du dispositif d'étanchéité à bagues coulissantes (9, 10, 109, 110) est prévue de telle sorte qu'elle puisse se déplacer dans le sens axial et en ce que des éléments de commande réglée sont prévus pour maintenir une pression axiale entre la bague coulissante (9, 109) et la contre-bague (10, 110), en formant un intervalle de lubrification (21, 121).

3. Dispositif d'étanchéité suivant les revendications 1 et 2, caractérisé en ce que les éléments de commande réglée qui sont destinés à maintenir la pression axiale sont formés par une contre-bague (10), se présentant sous la forme d'un piston annulaire, du dispositif d'étanchéité à bagues coulissantes, la pression axiale pouvant être réglée de l'extérieur par l'intermédiaire d'un conduit d'arrivée (15).

4. Dispositif d'étanchéité suivant les revendications 1 et 2, caractérisé en ce que les éléments de commande réglée qui sont destinés à maintenir la pression axiale sont constitués par des ressorts (123).

FIG.1

FIG.2

101  124  125  123  107  103  106  108  104  112  105  119  127  126

102  120  110  121  109  117  118  122

0 021 243